# EUROPÄISCHE PATENTSCHRIFT

(11) **EP 1 202 561 B1**
(45) Veröffentlichungstag und Bekanntmachung des Hinweises auf die Patenterteilung: **31.12.2008**
(21) Anmeldenummer: 01125777.1
(22) Anmeldetag: 29.10.2001
(51) Int. Cl.: H04N 3/15

(54) **Vorrichtung und Verfahren zum Auslesen mehrerer Mengen von Bildpunkten mit unterschiedlichen Abtastraten**
Apparatus and method for reading out several sets of pixels with different sampling rates
Dispositif et méthode de lecture de différents groupes de pixels avec différents taux d'échantillonage

(30) Priorität: 31.10.2000 DE 10053934
(43) Veröffentlichungstag der Anmeldung: 02.05.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Jung, Norbert, Dr.-Ing, Habsburgerallee 11, 52064 Aachen (DE); Eck, Kai, Habsburgerallee 11, 52064 Aachen (DE)
(74) Vertreter: Damen, Daniel Martijn

(56) Entgegenhaltungen:
- EP-A- 0 644 712
- DE-A- 19 534 334
- US-A- 5 146 340
- US-A- 5 854 656

## Beschreibung

Die Erfindung betrifft ein Verfahren zum Auslesen eines in Bildpunkte unterteilten elektronischen Bildsensors, aus welchem mit einer vorgegebenen Taktdauer Bildpunkte oder Bildpunkrgruppen ausgelesen werden können. Ferner betrifft die Erfindung eine Vorrichtung zum Auslesen eines in Bildpunkte unterteilten elektronischen Bildsensors, welche eine Adressierungseinheit zur Auswahl der in einem Takt auszulesenden Bildpunkte und/oder Bildpunktgruppen sowie eine Leseeinheit zum Auslesen der ausgewählten und adressierten Bildpunkte und/oder Bildpunktgruppen enthält.

Elektronische Bildsensoren, wie sie zum Beispiel bei der Darstellung von Röntgenbildern verwendet werden, bestehen in der Regel aus einem zweidimensionalen Feld ("array") von Bildpunkten. Diese Bildpunkte werden mit einer vorgegebenen, möglichst hohen Abtastrate von typischerweise 30 bis 60 Bildern pro Sekunde von Ausleseeinheiten ausgelesen, um anschließend von einem Computer weiterverarbeitet und unter anderem auf einem Monitor dargestellt zu werden. In der Regel sind die Bildpunkte dabei in Zeilen (oder Spalten) eingeteilt, und pro Auslesetakt wird jeweils eine komplette Zeile (oder Spalte) ausgelesen.

Wenn nur ein Teilbereich des zweidimensionalen Bildsensors von Interesse ist, ist es bekannt, das Auslesen auf die in diesem Teilbereich liegenden Bildpunkte beziehungsweise Zeilen zu beschränken- Hierdurch kann erreicht werden, dass die in dem interessierenden Bereich liegenden Bildpunkte mit einer höheren Abtastrate ausgelesen werden können, da sie bei gleichbleibender Dauer eines einzelnen Auslesetaktes für einen Bildpunkt bzw. eine Zeile öfter an die Reihe kommen.

Die DE19534334 beschreibt ein Verfahren zur optoelektronischen Abtastung von Vorlagen, insbesondere bei Scannern, bei der Bildsignalwerte mit verschiedenen Geschwindigkeiten aus einem optoelektronischen Wandler ausgelesen werden. Die Vorlage wird in verschiedene Abschnitte unterteilt, wobei abgetastete nicht interessierende Abschnitte verworfen werden.

Die EP-A-0644712 offenbart ein Bilderfassungssystem mit einem CCD Sensor für einen Röntgenapparat, bei dem ähnlich zur DE19534334 Teile des ausgelesenen Bildes verworfen werden.

Des weiteren ist aus der DE 195 31 627 C1 ein Verfahren bekannt, bei dem Teilbereiche eines zweidimensionalen Bildsensors gezoomt dargestellt werden können. Bei diesem Verfahren findet eine Abbildung von typischerweise 1000 x 1000 physikalischen Bildpunkten auf eine kleinere Menge von zum Beispiel 500 x 500 dargestellten Bildpunkte statt, wobei für eine Vergrößerung ein Teilbereich von 500 x 500 physikalischen Bildpunkten 1 : 1 den dargestellten Bildpunkten zugeordnet werden kann. Für eine verkleinerte Darstellung werden dagegen physikalische Bildpunkte zeilenweise und/oder spaltenweise zusammengefasst, um eine größere Anzahl solcher physikalischer Bildpunkte auf die begrenzte Anzahl der dargestellten Bildpunkte abbilden zu können. Das Besondere des Verfahrens liegt darin, dass der Umgang der Zusammenfassung von Bildpunkte lokal variiert, so dass ein nichtganzzahliger Faktor zwischen der Anzahl der physikalischen und der dargestellten Bildpunkte erreicht werden kann. Während mit einem derartigen Verfahren die räumliche Auflösung bei der Darstellung des Bildes variiert werden kann, bleibt die zeitliche Auflösung unverändert.

Vor diesem Hintergrund ist Aufgabe der vorliegenden Erfindung, eine Vorrichtung und ein Verfahren zur Verfügung zu stellen, mit welchen eine schnelle Darstellung eines elektronisch erfassten Bildes erreicht wird.

Diese Aufgabe wird durch ein Verfahren mit den Merkmalen des Anspruchs 1 und eine Vorrichtung mit den Merkmalen des Anspruchs 7 gelöst. Vorteilhafte Ausgestaltungen sind in den Unteransprüchen entfalten.

Das Verfahren zum Auslesen eines in Bildpunkte unterteilten elektronischen Bildsensors beruht darauf, dass Bildpunkte oder Bildpunktgruppen mit einer gegebenen Taktdauer ausgelesen werden können- Bei den Bildpunktgruppen kann es sich zum Beispiel um Bildzeilen handeln. Die Taktdauer entspricht der für das Auslesen eines Bildpunktes oder einer Bildpunktgruppe benötigten Zeit und wird in der Regel durch die Leistungsfähigkeit der elektronischen Bauelemente nach unten hin begrenzt. Das Verfahren ist dadurch gekennzeichnet, dass sich mindestens zwei Mengen von Bildpunkten und/oder Bildpunktgruppen unterscheiden lassen, wobei die Bildpunkte und/oder Bildpunktgruppen einer ersten Menge mit einer anderen Abtastrate als die Bildpunkte und/oder Bildpunktgruppen einer zweiten Menge ausgelesen werden. Wenn n ≥ 2 solche Mengen vorhanden sind, gibt es dementsprechend n verschiedene Abtastraten.

Durch das Verfahren werden somit in der Bildfläche verschiedene Bereiche geschaffen, welche jeweils mit unterschiedlicher Abtastrate ausgelesen werden. Dabei kann die Einteilung so stattfinden, dass ein besonders interessierender Bereich des Bildes ("region ofinterest" ROI) mit höherer Abtastrate ausgelesen wird als die übrigen Bildbereiche. Dies erlaubt dem Benutzer eine flexible Anpassung der Bildverarbeitungskette an die jeweiligen Anforderungen der aktuellen Anwendung, wobei gleichzeitig von den verfügbaren Ressourcen der Ausleseelektronik, der Datenübertragung und der Bildverarbeitung optimaler Gebrauch gemacht wird.

Die interessierenden Bildbereiche werden bei dem Verfahren mit bester Qualität und zeitlich höher aufgelöst dargestellt. Die quasi sofortige Verfügbarkeit von Bildern der interessierenden Bereiche verbessert auch die interaktiven Eigenschaften der Bildverarbeitungskerte, was insbesondere bei medizinischen Röntgen-Bildgebungsverfahren von großer Bedeutung sein kann So kommt es zum Beispiel bei der zeitkritischen Plazierung eines Katheters oder einer Nadel im Körper eines Patienten sehr darauf an, dass der ausführende Arzt aktuelle Bilder des Vorgangs erhält.

Bis auf die feine zeitliche Auflösung geht bei dem Verfahren aus den seltener abgetasteten Bildbereichen keine Information verloren, da die Bildinformation dort über mehrere Aufnahmen hinweg - zum Beispiel als Ladung - für das spätere Auslesen angesammelt wird. Eine solche längere Integration der Belichtung in den genannten Bereichen hat dort gleichzeitig ein verbessertes Signal-zu-Rauschen Verhältnis und damit eine qualitativ bessere Abbildung zur Folge. Typischerweise sind die Bildpunkte des Bildsensors in Zeilen einer zweidimensionalen Bildfläche gruppiert, wobei die Zeilen jeweils einheitlich mit einer bestimmten Taktdauer ausgelesen werden. Das zeilenweise Auslesen von Bildsensoren ist weitverbreiteter Stand der Technik und findet insbesondere bei den FDXD-Detektoren statt (FDXD ist die Abkürzung für "Flat Dynamic X-Ray Detector", d.h. flacher dynamischer Röntgendetektor). Dessen ungeachtet kann es jedoch gerade bei zukünftigen Detektoren möglich sein, nur Teile von Zeilen zu adressieren, so dass die interessierenden und höher abgetasteten Bereiche (ROI) nicht notwendigerweise ganze Zeilen abdecken müssen, sondern prinzipiell jede beliebige Form annehmen können.

Gemäß des Verfahrens greifen die verschiedenen Mengen der Bildpunkte und/oder Bildpunktgruppen (z.B. Zeilen) zumindest in einem Teilbereich der Bildfläche ineinander. Dies bedeutet Folgendes für die Mengen, die keine gemeinsamen Elemente haben: Wird zu den in den Mengen enthaltenen Bildpunkten in der Fläche des Bildsensors jeweils die konvexe Hülle gebildet, so überlappen sich diese konvexen Hüllen. Ein Teilbereich, in dem die Mengen ineinandergreifen, wird somit teilweise mit höherer und teilweise mit niedrigerer Abtastfrequenz dargestellt.

Insbesondere können die Bildpunktzeilen eines Bildes alternierend zwei oder mehr Mengen verschiedener Abtastraten zugeordnet sein. Zum Beispiel können die geradzahligen Bildzeilen mit doppelter Abtastfrequenz wie die ungeradzahligen Bildzeilen abgetastet werden. Die geradzahligen Bildzeilen bieten somit eine Darstellung des kompletten Bildes mit hoher zeitlicher und verringerter räumlicher Auflösung. Die nur halb so oft ausgelesenen ungeradzahligen Zeilen liefern dann eine verbesserte räumliche Auflösung nach. Selbstverständlich kann das Verhältnis der Abtastraten in den beiden Bildzeilen-Mengen beliebig gewählt werden. Ferner muss nicht nach jeder Bildzeile ein Wechsel der Abtastfrequenz erfolgen, sondern es können zum Beispiel drei benachbarte Zeilen mit geringerer Abtastfrequenz gefolgt von einer Zeile höherer Abtastfrequenz vorgesehen sein, wobei sich dieses Muster periodisch wiederholen kann oder auch nicht.

Gemäß einer Weiterbildung des Verfahrens erfolgt die Weiterverarbeitung der Signale von ausgelesenen Bildpunkten in Abhängigkeit von der Abtastrate des jeweiligen Bildpunktes. Insbesondere kann die Signalverstärkung entsprechend der Abtastrate eingestellt werden. Hierdurch kann berücksichtigt werden, dass bei üblichen elektronischen Bildsensoren eine Ladungsansammlung in den Bildpunkten stattfindet, die stetig mit der Belichtungszeit steigt. Seltener abgetastete Bildpunkte enthalten daher eine entsprechend höhere, da über einen längeren Zeitraum angesammelte Ladung. Dieser höheren zu erwartenden Ladung wird die Sensitivität der Ausleseeinrichtungen entsprechend angepasst. Dabei ist darauf zu achten, dass in den seltener ausgelesenen Bildbereichen die Abtastfrequenz immer noch hoch genug liegt, so dass keine Sättigung der Bildpunkte auftritt, die einen Informationsverlust zur Folge hätte. Dies gilt zumindest für jene Bildpunkte, welche noch interessierende Information enthalten. Eine eventuelle Sättigung von zum Beispiel außerhalb des Durchstrahlungsbereichs eines Patienten liegenden Bildpunkten ist dagegen unbeachtlich.

Bei dem Bildsensor kann es sich insbesondere um einen solchen handeln, welcher für Röntgenstrahlen sensitiv ist. Solche Bildsensoren kommen bei medizinischen Bildgebungsverfahren wie zum Beispiel der Röntgen-Computertomographie zum Einsatz, wobei in den entsprechenden Anwendungen häufig eine zeitlich hoch aufgelöst Darstellung von räumlich begrenzten interessierenden Bereichen erforderlich ist. Die für medizinische Bildgebungsverfahren erforderlichen Gerätschaften sind in der Regel sehr kostenintensiv, so dass hier die optimale Ausnutzung vorhandener Ressourcen besonders vorteilhaft ist.

Gemäß einer Weiterbildung des Verfahrens werden diejenigen Bildpunkten und/oder Bildpunktgruppen, die mit einer geringeren Abtastrate ausgelesen werden, mit einer geringeren Intensität bestrahlt. Die mit geringerer Abtastrate ausgelesenen Bildpunkte haben zwischen zwei Auslesetakten mehr Zeit zur Verfügung, um Bildinformation - zum Beispiel in Form von Ladung - anzusammeln. Diese Bildpunkte können somit mit einer geringeren Intensität der zur Bilderzeugung verwendeten Strahlung belichtet werden, ohne dass die bei der selteneren Abtastung der Bildpunkte zur Verfügung stehende Bildinformation hierdurch vermindert würde. Die somit gegebene Möglichkeit, Bildbereiche mit einer geringeren Intensität zu belichten, ist insbesondere bei medizinischen Röntgenabbildungen von Vorteil, denn in diesem Fall kann durch eine lokale Strahldämpfung die Dosis minimiert werden, welcher der Patient ausgesetzt ist.

Die Erfindung betrifft ferner eine Vorrichtung zum Auslesen eines in Bildpunkte unterteilten elektronischen Bildsensors, welche eine Adressierungseinheit zur Auswahl der in einem Takt auszulesenden Bildpunkte und/oder Bildpunktgruppen sowie eine Leseeinheit zum Auslesen der ausgewählten und adressierten Bildpunkte und/oder Bildpunktgruppen enthält. Dabei ist die Adressierungseinheit so eingerichtet, dass sie die adressierten Bildpunkte und/oder Bildpunktgruppen mit unterschiedlicher Rate auswählt. Anders als bei üblichen Adressierungseinheiten werden somit die in Frage kommenden Bildpunkte oder Bildpunktgruppen nicht in geordneter Reihenfolge mit gleicher Häufigkeit ausgewählt, sondern es gibt mindestens zwei Mengen von Bildpunkten oder Bildpunktgruppen, wobei die Elemente der einen Menge öfter von der Adressierungseinheit ausgewählt werden als die Elemente der anderen Menge.

Mit einer derartigen Vorrichtung lässt sich das oben erläuterte Verfahren implementieren, so dass die dort geschilderten Vorteile erreicht werden können. Die Adressierungseinheit und die Leseeinheit der Vorrichtung können dabei insbesondere so ausgestaltet werden, dass sie auch die verschiedenen Varianten des Verfahrens realisieren können, also zum Beispiel eine zeilenweise Einteilung des Bildes, ineinandergreifende Bildpunkt-Mengen unterschiedlicher Abtastrate, eine Sensitivität des Bildsensors für Röntgenstrahlen und dergleichen.

Insbesondere kann die Leseeinheit so eingerichtet sein, dass sie die Verarbeitung der ausgelesenen Signale der Bildpunkte nach der Rate ausrichtet, mit welcher die jeweiligen Bildpunkte und/oder Bildpunktgruppen adressiert wurden. Vorzugsweise wird die Signalverstärkung dieser Rate angepasst, so dass berücksichtigt werden kann, dass seltener abgetastete Bildpunkte eine aufgrund der längeren Belichtungszeit höhere Signalstärke erwarten lassen.

Im Folgenden wird die Erfindung mit Hilfe der Figuren beispielhaft erläutert. Es zeigen:
- Fig. 1: das Röntgenbild einer Hand mit einer Unterteilung des Bildes in Bereiche höheren und geringeren Interesses;
- Fig. 2: die zeitliche Abstimmung der Ansteuerung der Röntgenröhre sowie des Auslesens der Bildpunkte bei einem erfindungsgemäßen Verfahren.

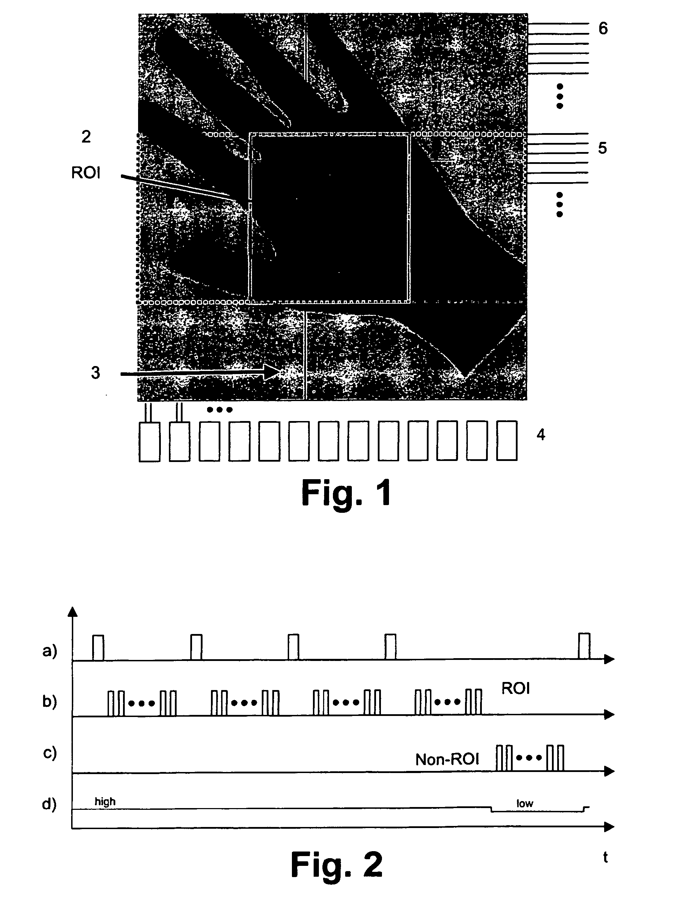

Figur 1 zeigt das Röntgenbild 1 einer Hand, wobei im Zentrum des Bildes ein interessierender Bereich 2 (ROI) hervorgehoben ist. Der Rest 3 des Bildes stellt einen Bereich geringeren Interesses dar. Des weiteren sind am Rand des Bildes die Gate-Zeilen 5 des interessierenden Bereiches 2 sowie die Gate-Zeilen 6 des übrigen Bereiches 3 angedeutet, und am unteren Bildrand sind die Verstärkungschips 4 dargestellt, welche dem Auslesen von Bildzeilen dienen.

Bei dem Bildsensor handelt es sich um einen FDXD-Detektor, der ausgelesen wird, indem Zeile für Zeile direkt zu einem Feldausgang übertragen wird. Dabei werden beim Auslesen einer Zeile keine Zeilen der Nachbarschaft betroffen. Anders als bei zum Beispiel CCD-basierten Bildgebern ist nicht jedesmal ein vollständiges Auslesen des Bildes erforderlich. Die nicht ausgelesenen Bildzeilen, die in einem bestimmten Takt bzw. Zyklus nicht adressiert wurden, bleiben dabei in der Regel für ihre weitere Verwendung unbeeinträchtigt. Dies gilt unter der Bedingung, dass während der mehrfachen Belichtung durch Röntgenimpulse kein relevantes Pixel eine Sättigung erreicht. Nicht relevante Pixel sind zum Beispiel solche, die dem direkten Strahl ohne Passage durch den Patienten ausgesetzt sind.

Die in Figur 1 dargestellte zentrale ROI 2 wird durch Adressierung der entsprechenden Gate-Zeilen 5 mit einer erhöhten Abtastrate ausgelesen. Diese Abtastrate kann zum Beispiel 60 Bilder pro Sekunde betragen. Mit einer geringeren Rate von zum Beispiel der Hälfte oder einem Viertel der maximalen Abtastrate (das heißt 30 oder 15 Bilder pro Sekunde) wird dann das komplette Bild unter Verwendung aller Gate-Zeilen 5 und 6 entsprechend ihrer Reihenfolge ausgelesen. Die Sensitivität der Verstärkungschips 4 wird während des Auslesens entsprechend der Ladungsmenge umgeschaltet, die innerhalb und außerhalb der ROI 2 zu erwarten ist.

Figur 2 zeigt schematisch die Zeitabläufe verschiedener Vorgänge bei Durchführung des erfindungsgemäßen Verfahrens. Auf der horizontalen Achse ist dabei die Zeit aufgetragen.

Das oberste Diagramm a) von Figur 2 zeigt die Belichtungsimpulse, welche von der Röntgenröhre abgegeben werden. Während jedes Impulses sammelt sich in den Bildpunkten des Bildsensors additiv eine entsprechende Ladungsmenge an, welche beim Auslesen des Bildpunktes abgeführt wird.

Das zweite Diagramm b) von Figur 2 zeigt die Adressierung der Gate-Zeilen 5 und damit das Auslesen des interessierenden Bereiches 2 (ROI). Nach Beendigung des Auslesens kann ein neuer Röntgenimpuls gegeben werden. Da zwischen zwei solchen Röntgenimpulsen nicht das komplette Bild ausgelesen werden muss, kann ihr Abstand entsprechend kürzer gemacht werden, was zur verbesserten zeitlichen Auflösung der Darstellung des interessierenden Bereiches 2 führt.

Im Diagramm c) ist die Adressierung der Gate-Zeilen 6 des Bereiches 3 außerhalb der ROI 2 dargestellt. Wie aus den Diagrammen b) und c) erkennbar ist, wird der interessierende Bereich ROI viermal ausgelesen, bevor einmal der übrige Bereich 3 des Bildes ausgelesen wird. Der interessierende Bereich ROI wird somit mit einer viermal höheren Abtastrate erfasst als der Rest des Bildes. In dem letzten in Figur 2 dargestellten Intervall zwischen zwei Röntgenimpulsen wird das vollständige Bild ausgelesen, also sowohl der interessierende Bereich ROI als auch der übrige Teil 3 des Bildes. Dementsprechend wird eine längere Zeit für das gesamte Auslesen benötigt, so dass das Intervall zwischen den zwei Röntgenimpulsen entsprechend größer zu wählen ist.

Das unterste Diagramm d) aus Figur 2 zeigt die Sensitivität der Verstärker während des Auslesens. Zu erkennen ist, dass die Sensitivität während des Auslesens von Bildpunkten des interessierenden Bereiches ROI hoch und während des Auslesens des übrigen Bildbereiches 3 geringer ist. Diese Veränderung der Sensitivität berücksichtigt, dass die seltener ausgelesenen Bildbereiche 3 zwischen zwei Auslesevorgängen mehrfach belichtet wurden (nämlich im dargestellten Beispiel viermal), so dass sie eine entsprechend höhere Ladungsmenge erwarten lassen. Diese höhere Ladung wird durch die verringerte Sensitivität kompensiert.

Das erfindungsgemäße Verfahren erlaubt es somit, den besonders interessierenden Bereich ROI eines Bildes mit höherer Abtastrate und daher zeitlich besser aufgelöst darzustellen. Weniger interessierende Bildbereiche werden zeitlich weniger stark aufgelöst, zeigen jedoch aufgrund der längeren Belichtung ein besseres Signal-zu-Rauschen Verhältnis.

## Patentansprüche

1. Verfahren zum Auslesen eines in Bildpunkte unterteilten elektronischen Bildsensors,
- aus dem mit einer gegebenen Taktdauer Bildpunkte oder Bildpunktgruppen ausgelesen werden können, wobei
- der Bildsensor in mindestens zwei Bereiche unterteilt wird,
- welche entsprechend mindestens zwei Mengen von Bildpunkten und/oder Bildpunktgruppen zugeordnet sind,
- deren Elemente mit unterschiedlicher Abtastrate ausgelesen werden,
**dadurch gekennzeichnet, dass**
- der Bereich mit niedriger Abtastrate eine längere Belichtungszeit aufweist;
- die mindestens zwei Bereiche beide zur Bilddarstellung verwendet werden; und
- die Mengen der Bildpunkte und/oder Bildpunktgruppen derart angeordnet werden, dass diese zumindest in einem Teilbereich der Bildfläche ineinander greifen.

2. Verfahren nach Anspruch 1,
**dadurch gekennzeichnet,**
**dass** die Bildpunkte zu Zeilen eines zweidimensionalen Bildes gruppiert sind und die Zeilen, die einer Menge angehören, jeweils mit einheitlicher Abtastrate ausgelesen werden.

3. Verfahren nach Anspruch 2,
**dadurch gekennzeichnet,**
**dass** die Bildpunktzeilen des Bildes alternierend mindestens zwei Mengen verschiedener Abtastraten zugeordnet sind.

4. Verfahren nach mindestens einem der Ansprüche 1 bis 3,
**dadurch gekennzeichnet,**
**dass** die Weiterverarbeitung der Signale von ausgelesenen Bildpunkten, insbesondere ihre Verstärkung, in Abhängigkeit von der jeweiligen Abtastrate der Bildpunkte erfolgt.

5. Verfahren nach mindestens einem der Ansprüche 1 bis 4,
**dadurch gekennzeichnet,**
**dass** der Bildsensor für Röntgenstrahlen sensitiv ist.

6. Verfahren nach mindestens einem der Ansprüche 1 bis 5,
**dadurch gekennzeichnet,**
**dass** die Bildpunkte und/oder die Bildpunktgruppen, die mit einer geringeren Abtastrate ausgelesen werden, mit einer geringeren Intensität der verwendeten Strahlung bestrahlt werden als jene mit höherer Abtastrate.

7. Vorrichtung zum Auslesen eines in Bildpunkte unterteilten elektronischen Bildsensors (1), welche eine Adressierungseinheit zur Auswahl der in einem Takt auszulesenden Bildpunkte und/oder Bildpunktgruppen sowie eine Leseeinheit zum Auslesen der ausgewählten und adressierten Bildpunkte und/oder Bildpunktgruppen enthält,
**dadurch gekennzeichnet,**
**dass** der Bildsensor in mindestens zwei Bereiche unterteilt ist, welche entsprechend mindestens zwei Mengen von Bildpunkten und/oder Bildpunktgruppen zugeordnet sind, die Adressierungseinheit so eingerichtet ist, dass sie die adressierbaren Bildpunkte und/oder Bildpunktgruppen mit unterschiedlicher Abtastrate auswählt, und der Bereich mit niedriger Abtastrate eine längere Belichtungszeit aufweist; wobei die mindestens zwei Bereiche beide für die Bilddarstellung verwendbar sind und die Mengen der Bildpunkte und/oder Bildpunktgruppen derart angeordnet sind, dass diese zumindest in einem Teilbereich der Bildfläche ineinander greifen.

8. Vorrichtung nach Anspruch 7,
**dadurch gekennzeichnet,**
**dass** die Leseeinheit so eingerichtet ist, dass sie die Verarbeitung, insbesondere die Signalverstärkung, nach der Abtastrate ausrichtet, mit welcher die jeweiligen Bildpunkte und/oder Bildpunktgruppen adressiert werden.

## Claims

1. A method of reading out an electronic image sensor that is subdivided into picture elements,
- from which electronic image sensor picture elements or groups of picture elements can be read out with a predetermined clock period, wherein
- the image sensor is subdivided into at least two areas,
- to which accordingly at least two quantities of picture elements or groups of picture elements are assigned,
- the elements of which are read out at a different scanning rate,
**characterized in that**
- the area that is read out at a lower scanning rate exhibits a longer irradiation time;
- the at least two areas are both used for image display; and
- the quantities of picture elements and/or groups of picture elements are arranged so as to overlap at least in a sub-region of the picture area.

2. A method as claimed in claim 1,
**characterized in that** the picture elements are grouped so as to form lines of a two-dimensional image, and the lines that belong to a quantity are all read out at a uniform scanning rate.

3. A method as claimed in claim 2,
**characterized in that** the lines of picture elements of the image are alternately assigned to at least two quantities with different scanning rates.

4. A method as claimed in at least one of the claims 1 to 3,
**characterized in that** the further processing of the signals from picture elements read out, notably their amplification, is performed in dependence on the relevant scanning rate of the picture elements.

5. A method as claimed in at least one of the claims 1 to 4,
**characterized in that** the image sensor is sensitive to X-rays.

6. A method as claimed in at least one of the claims 1 to 5,
**characterized in that** the picture elements and/or the groups of picture elements that are read out at a lower scanning rate are irradiated with a lower intensity than those read out at a higher scanning rate.

7. A device for reading out an electronic image sensor (1) that is subdivided into picture elements, which device is provided with an addressing unit for selecting the picture elements and/or groups of picture elements to be read out within one clock period as well as with a reading unit for reading out the selected and addressed picture elements and/or groups of picture elements,
**characterized in that**
the image sensor is subdivided into at least two areas, to which accordingly at least two quantities of picture elements or groups of picture elements are assigned, the addressing unit is arranged in such a manner that it selects the addressable picture elements and/or groups of picture elements at a different scanning rate, and the area selected at a lower scanning rate exhibits a longer irradiation time; wherein the at least two areas can both be used for image display, and the quantities of picture elements and/or groups of picture elements are arranged so as to overlap at least in a sub-region of the picture area.

8. A device as claimed in claim 7,
**characterized in that** the reading unit is arranged in such a manner that it adapts the processing, notably the signal amplification, to the scanning rate at which the relevant picture elements and/or groups of picture elements are addressed.

## Revendications

1. Procédé de lecture d'un capteur d'image électronique subdivisé en pixels :
- à partir duquel des pixels ou groupes de pixels peuvent être lus avec une durée de rythme donnée,
- le capteur d'image étant subdivisé en au moins deux zones
- qui sont affectées en fonction d'au moins deux quantités de pixels et/ou
- groupes de pixels,
- dont les éléments sont lus avec différents taux d'échantillonnage,
**caractérisé en ce**
- **que** la zone présente un temps d'exposition plus long avec un faible taux d'échantillonnage;
- les deux zones au moins sont toutes deux utilisées pour la représentation de l'image; et
- les quantités des pixels et/ou des groupes de pixels sont disposées de telle sorte que celles-ci s'imbriquent l'une dans l'autre, du moins dans une zone partielle de la surface d'image.

2. Procédé selon la revendication 1,
**caractérisé en ce**
**que** les pixels sont groupés en lignes d'une image bidimensionnelle et les lignes qui appartiennent à une quantité sont respectivement lues à un taux d'échantillonnage uniforme.

3. Procédé selon la revendication 2,
**caractérisé en ce**
**que** les lignes de pixel de l'image sont affectées en alternance à au moins deux quantités de différents taux d'échantillonnage.

4. Procédé selon au moins l'une des revendications 1 à 3,
**caractérisé en ce**
**que** le traitement des signaux par des pixels lus, en particulier leur amplification, est effectué en fonction du taux d'échantillonnage respectif des pixels.

5. Procédé selon au moins l'une des revendications 1 à 4,
**caractérisé en ce**
**que** le capteur d'image est sensible aux rayons X.

6. Procédé selon au moins l'une des revendications 1 à 5,
**caractérisé en ce**
**que** les pixels et/ou les groupes de pixels qui sont lus avec un taux d'échantillonnage inférieur sont exposés avec une intensité inférieure du rayonnement utilisé que ceux avec un taux d'échantillonnage plus élevé.

7. Dispositif de lecture d'un capteur d'image (1) électronique subdivisé en pixels qui contient une unité d'adressage pour la sélection des pixels et/ou groupes de pixels lus dans une cadence ainsi qu'une unité de lecture pour la lecture des pixels et/ou groupes de pixels sélectionnés et adressés, **caractérisé en ce**
**que** le capteur d'image est subdivisé en au moins deux zones qui sont affectées en fonction d'au moins deux quantités de pixels et/ou de groupes de pixels,
**que** l'unité d'adressage est organisée de telle sorte qu'elle sélectionne les pixels et/ou groupes de pixels adressables avec un taux d'échantillonnage différent et la zone avec un taux d'échantillonnage inférieur présente un temps d'exposition plus long; les deux zones au moins pouvant être utilisées pour la représentation de l'image et les quantités des pixels et/ou des groupes de pixels étant disposées de telle sorte que celles-ci s'imbriquent l'une dans l'autre, du moins dans une zone partielle de la surface d'image.

8. Dispositif selon la revendication 7,
**caractérisé en ce**
**que** l'unité de lecture est disposée de telle sorte qu'elle oriente le traitement, en particulier l'amplification du signal selon le taux d'échantillonnage auquel les pixels et/ou groupes de pixels respectifs sont adressés.
